# EUROPÄISCHE PATENTSCHRIFT

(11) **EP 1 628 819 B1**
(45) Veröffentlichungstag und Bekanntmachung des Hinweises auf die Patenterteilung: **01.09.2010**
(21) Anmeldenummer: 04741630.0
(22) Anmeldetag: 21.05.2004
(51) Int. Cl.: B29C 45/00, B29C 45/16, B29C 45/04

(54) **VERFAHREN UND VORRICHTUNG ZUM HERSTELLEN VON MEHRTEILIGEN GEGENSTÄNDEN**
METHOD AND DEVICE FOR THE PRODUCTION OF MULTI-PART OBJECTS
PROCEDE ET DISPOSITIF PERMETTANT DE PRODUIRE DES OBJETS COMPORTANT PLUSIEURS PARTIES

(30) Priorität: 22.05.2003 CH 9102003
(43) Veröffentlichungstag der Anmeldung: 01.03.2006
(73) Patentinhaber: FOBOHA GMBH FORMENBAU, 77716 Haslach (DE)
(72) Erfinder: ARMBRUSTER, Rainer, 77709 Wolfach (DE)
(74) Vertreter: Rentsch & Partner
(86) Internationale Anmeldenummer: PCT/EP2004/050891
(87) Internationale Veröffentlichungsnummer: WO 2004/103676

(56) Entgegenhaltungen:
- EP-A- 1 226 916
- WO-A-00/73040
- WO-A-02/04186
- US-A- 4 444 711
- US-A- 5 221 538
- US-B1- 6 299 816
- DASSOW J: "FUER ALLE FAELLE GERUESTET, TECHNOLOGIEFUEHRERSCHAFT DURCH MEHRKOMPONENTENTECHNIK" KUNSTSTOFFE, CARL HANSER VERLAG. MUNCHEN, DE, Bd. 92, September 2002 (2002-09), Seiten 105-109, XP002237523 ISSN: 0023-5563
- PATENT ABSTRACTS OF JAPAN Bd. 0041, Nr. 39 (M-034), 30. September 1980 (1980-09-30) -& JP 55 095544 A (JAPAN STEEL WORKS LTD:THE), 19. Juli 1980 (1980-07-19)
- JAEGER A: "NEUES VOM MEHRKOMPONENTEN-SPRITZGIESSEN VERFAHRENSKOMBINATIONEN BIETEN WIRTSCHAFTLICHE VORTEILE" KUNSTSTOFFE, CARL HANSER VERLAG. MUNCHEN, DE, Bd. 89, Nr. 9, September 1999 (1999-09), Seiten 85-89, XP000958432 ISSN: 0023-5563
- "INJECTIELASSEN VAN POLYAMIDE INLAATSPRUITSTUKKEN" KUNSTSTOF EN RUBBER, WYT EN ZONEN UITGEVERS. ROTTERDAM, NL, Bd. 52, Nr. 11, November 1999 (1999-11), Seiten 30-31, XP000928465 ISSN: 0167-9597
- "TECHNIQUE PRODUCES ASSEMBLED HOLLOW PARTS OUT OF THE MOLD" MODERN PLASTICS INTERNATIONAL, MCGRAW-HILL,INC. LAUSANNE, CH, Nr. 12, Dezember 2002 (2002-12), Seite 31, XP001121771 ISSN: 0026-8283

## Beschreibung

Die Erfindung betrifft ein Verfahren und eine Vorrichtung zur Herstellung von mehrteiligen Gegenständen aus Kunststoff gemäss den unabhängigen Patentansprüchen.

Die Wirtschaftlichkeit der Herstellung von Gegenständen aus Kunststoff wird wesentlich durch die Auslastung der Spritzgiessmaschine und der Spritzgiessform bestimmt, da dies die kostenintensivsten Faktoren, neben dem Materialverbrauch sind. Vorteile werden erzielt, indem mit einer Spritzgiessmaschine, respektive mit einer Spritzgiessform mehr Teile pro Zeiteinheit hergestellt werden, indem die Zykluszeit verringert oder in einer Spritzgiessform die Kavitäten so angeordnet werden, dass mehr Teile herstellbar sind.

Aus dem Stand der Technik sind Vorrichtungen und Verfahren bekannt, die zum Herstellen von mehrteiligen Gegenständen oder Gegenständen die aus mehreren Komponenten bestehen in einer Form geeignet sind, wobei die mehreren Teile in der Form miteinander in Wirkverbindung gebracht werden ("In-Mold-Assembly"). Diese Verfahren bieten die Möglichkeit insbesondere hohe Gegenstände herzustellen, die mit herkömmlichen Mitteln nicht erzeugbar wären.

EP1060868 zeigt eine Spritzgiessform mit einer einzigen Spritzgiessebene und zwei darin angeordneten Drehtellern, die zur Herstellung von mehrteiligen Gegenständen aus Kunststoff geeignet ist. Aufgrund der Anordnung der Kavitäten und der Drehteller weist diese Vorrichtung nur eine relativ geringe Kapazität auf, die zur Folge hat, dass die verwendeten Mittel relativ schlecht ausgelastet sind. Ein weiterer Nachteil besteht darin, dass infolge der erforderlichen Kühlzeiten die Vorrichtung zwangsweise stillstehen muss, damit der Kunststoff der ersten Komponente, respektive des ersten Teils aushärten kann.

Von J. Dassow ist 2002 in der Zeitschrift Kunststoffe ein Artikel erschienen (DASSOW J.: " "Für alle Fälle gerüstet, Technologieführerschaft durch Mehrkomponententechnik"; Kunststoffe, , Carl Hanser Verlag, München, Bd. 92, September 2002 (2002-09), Seiten 105 - 109, XP002237523 ISSN: 0023-5563), der in allgemeiner Weise die Vorteile der von der Anmelderin entwickelten 180°-Etagen-Wende-, sowie der Würfelwerktechnologie beleuchtet. Beide Technologien betreffen Werkzeuge zur Herstellung von 2K-Kunststoffteilen. Die Werkzeuge weisen ein Formmittelteil auf, das um eine senkrecht zu den Holmen einer Spritzgiessmaschine angeordnete Drehachse drehbar gelagert ist. Eine erste Materialkomponente wird in einer ersten Trennebene gespritzt. Die Teile der ersten Trennebene werden mit dem Formmittelteil in die zweite Trennebene transportiert, wo eine zweite Materialkomponente gespritzt wird.

US 5,221,538 beschreibt eine Spritzgiessmaschine zur Herstellung von hohlen Gegenständen. Zwei Teile werden in ein und der selben Ebene eines Drehtellers hergestellt, dann zu mittels dem Drehteller zu einem hohlen Gegenstand zusammengesetzt und in einer dritten Station des Drehteller durch eine weitere Materialkomponente im Bereich der Verbindungsstelle umspritzt.

Es ist Aufgabe der Erfindung ein Verfahren und eine Vorrichtung zur Durchführung des Verfahrens zu zeigen, die zur Herstellung von mehrteiligen Gegenständen aus Kunststoff geeignet ist und eine verbesserte Ausnutzung einer Spritzgiessmaschine, respektive einer Spritzgiessform ermöglicht.

Die Aufgabe wird durch die in den Patentansprüchen definierte Erfindung gelöst.

Vorteilhaft ist die Herstellung von mehrteiligen Gegenständen aus Kunststoff indem die mehreren Teile in ein und derselben Form hergestellt und montiert werden. Im Unterschied zum Stand der Technik beruht die Erfindung auf einem Verfahren das vorzugsweise vier, in mehreren Ebenen angeordnete Verfahrensbereiche aufweist, die vorzugsweise wie folgt angeordnet sind. In einem ersten Verarbeitungsbereich, der in einer ersten Ebene angeordnet ist, werden eines oder mehrere Teile mittels Spritzgiessen aus einem oder mehreren Kunststoffen hergestellt. In einem zweiten Verarbeitungsbereich, der in einer zweiten Ebene angeordnet ist, werden das mindestens eine Teil einer Manipulation unterzogen, z.B. durch einen Manipulator, bei mehreren Teilen indem diese durch Umsetzen miteinander in Wirkverbindung gebracht, respektive montiert werden. In einem dritten Verarbeitungsbereich, der in einer dritten Ebene angeordnet ist, die vorzugsweise zur ersten parallel und zur zweiten rechtwinklig angeordnet ist, wird das mindestens eine Teil einem weiteren Spritzgiessprozess unterzogen, z.B. indem es durch eine Materialkomponente aus demselben oder einem anderen Material umspritzt oder durchdrungen oder indem es verschweisst wird. In einem vierten Verarbeitungsbereich, der vorzugsweise in einer vierten Ebene angeordnet ist, die zur zweiten parallel ist, wird ein Gegenstand einem weiteren Verarbeitungsschritt unterzogen und/oder aus der Spritzgiessvorrichtung entnommen. Die einzelnen Teile, respektive das fertige Produkt werden vorzugsweise mittels eines beweglich angeordneten Bestandteils der Spritzgiessform von einem zum nächsten Verarbeitungsbereich bewegt. Die Verfahrensbereiche 1 und 3, sowie 2 und 4 laufen vorzugsweise simultan ab. Je nach Anwendungsgebiet eignen sich gewisse Ausführungsformen des erfindungsgemässen Verfahrens auch zur Verarbeitung von anderen Materialien als Kunststoff. Neben Metallen besteht die Möglichkeit auch biodegradable Stoffe, wie z.B. Schokolade oder andere Lebensmittel, zu verarbeiten.

Einzelne Verfahrensschritte werden anhand des nachfolgenden Beispiels an einem zweiteiligen Gegenstand näher erläutert.
1. Herstellen eines ersten und eines zweiten Teils aus einer oder mehreren Materialkomponenten durch Einspritzen von Kunststoff in eine erste und eine zweite Kavität, welche durch erste Kavitätenhälften einer ersten Formhälfte und zweite Kavitätenhälften einer um eine Hauptdrehachse drehbar angeordneten zweiten Formhälfte in einem ersten Verarbeitungsbereich gebildet werden;
2. Öffnen der ersten und der zweiten Kavität entlang einer ersten Schliessebene, durch relatives Verschieben der ersten gegenüber der zweiten Formhälfte entlang einer ersten Bewegungsrichtung, die vorzugsweise im Wesentlichen senkrecht zur Hauptdrehachse angeordnet ist, wobei das erste und das zweite Teil mit der zweiten, drehbar angeordneten Formhälfte wirkverbunden bleiben;
3. Drehen der zweiten Formhälfte und mit ihr das erste und das zweite Teil um einen Winkel W um die Hauptdrehachse in einen zweiten Verarbeitungsbereich;
4. Wirkverbinden des ersten mit dem zweiten Teil und/oder Befüllen des ersten und/oder des zweiten Teil, wobei vorzugsweise mindestens eines der beiden Teile mit der zweiten, drehbar angeordneten Formhälfte wirkverbunden bleibt;
5. Drehen der zweiten Formhälfte und mit ihr das erste und das zweite Teil um den Winkel W, so dass die beiden wirkverbundenen Teile im Bereich einer zweiten Schliessebene in einen dritten Verarbeitungsbereich zu liegen kommen;
6. Einschliessen der beiden Teile im Bereich der zweiten Schliessebene in mindestens einer dritten Kavität, welche durch die zweite und eine dritte Formhälfte, sowie bereichsweise durch mindestens eines der beiden Teile gebildet wird und entlang der zweiten Schliessebene trennbar ist;
7. Einspritzen von Kunststoff in die mindestens eine dritte Kavität zur Bildung eines dritten Bereichs/Teils, so dass die beiden Teile durch den dritten Bereich/Teil bevorzugt zumindest bereichsweise umspritzt oder durchdrungen sind.
8. Öffnen der dritten Kavität entlang der zweiten Schliessebene durch relatives Verschieben der dritten gegenüber der zweiten Formhälfte.
9. Drehen der zweiten Formhälfte und mit ihr die beiden Teile um den Winkel W in einen vierten Verarbeitungsbereich für die Entnahme der fertigen Teile günstige Position.
10. Entnahme der fertigen Teile aus der Spritzgiessvorrichtung.

Vorzugsweise werden die Schritte 1 und 7, die Schritte 4 und 10, sowie die Schritte 3, 5 und 9 im Wesentlichen gleichzeitig durchgeführt. Je nach Anwendungsgebiet sind anstelle der Schritte 6 and 7 andere Verbindungsverfahmn/Verfahrenssehritte möglich.

Die Erfindung ermöglicht eine Herstellung von ein oder mehrteiligen Produkten, respektive Produkten, die aus mehreren Komponenten bestehen, in einer einzigen Spritzgiessvorrichtung mit mehreren, vorzugsweise parallel zueinander angeordneten Schliessebenen.

Zur Durchführung des erfindungsgemässen Verfahrens eignet sich eine Vorrichtung besonders, die auf dem Etagenwendesystem derselben Anmelderin beruht, so wie es unter anderem in EP1155802 beschrieben ist. Dieses Etagenwendesystem weist zwei Spritzgiessebenen auf, in denen im Wesentlichen gleichzeitig Teile hergestellt werden, die aus mehreren Komponenten bestehen. Eine mittlere Formhälfte wird bei jedem Arbeitszyklus um 180° gedreht.

Die Weiterentwicklung des Wendesystems, wie es vorzugsweise verwendet wird, weist zwei gemeinsam und bei Bedarf relativ zueinander verschiebbare Traversen auf, die vorzugsweise an Holmen einer Spritzgiessmaschine befestigt sind. Die Traversen weisen je einen um eine zu den Holmen senkrecht angeordnete Drehachse drehbaren, gegeneinander ausgerichteten Adapter auf, welcher zur Aufnahme einer mittleren zweiten Formhälfte dazwischen dient. Die zweite Formhälfte ist zwischen einer in der Regel feststehenden ersten Formhälfte und einer entlang der Holme verschiebbar angeordneten dritten Formhälfte angeordnet. Die Übergabe von Medien wie Kühlmittel, Hydraulik, Strom und Daten erfolgt vorzugsweise über normierte Schnittstellen, z.B. zwischen einem Adapter und einer Formhälfte, die einen einfachen Austausch ermöglichen. Vorzugsweise seitlich oder oberhalb (senkrecht zur Drehachse) ist mindestens ein Manipulator angeordnet, der zur Manipulation, respektive zur Bearbeitung von einem oder mehreren Zwischenprodukte dient. Bei einer bevorzugten Ausführungsform kommt eine Umsetzvorrichtung zum Einsatz, die zur Handhabung, respektive zur Wirkverbindung des ersten und/oder des zweiten Teils dient. Diese Umsetzvorrichtung bildet einen Bestandteil der Spritzgiessvorrichtung oder ist als separates Aggregat gestaltet.

Mit Bezugnahme auf das obige Beispiel weist der Formmittelteil vorzugsweise vier identische zweite Formhälften mit entsprechenden Kavitätenhälften auf, die je paarweise in einer ersten und einer zweiten Schliessebene mit der ersten, respektive der dritten Formhälfte wirkverbindbar sind. Die beschriebene Vorrichtung weist einen robusten, einfachen Aufbau auf, der insbesondere für grosse Formen geeignet ist. Insbesondere aufgrund der mehrseitigen Abstützung der zweiten Formhälfte lassen sich hohe Produktionskapazitäten realisieren.

Alternative Vorrichtungen, insbesondere Vorrichtungen, die nicht oder nur einseitig, z.B. auf den Holmen einer Spritzgiessmaschine, abstützen, sind für die Durchführung des beschriebenen Verfahrens, je nach Anwendungsbereich ebenfalls geeignet. Eine asymmetrische, z.B. einseitige Abstützung der zweiten Formhälfte bewirkt jedoch, insbesondere bei grösseren Formen, hohe Massekräfte, die einer effizienten Produktionsweise mit geringen Zykluszeiten entgegenstehen.

Das hier beschriebene Verfahren eignet sich beispielsweise für die Herstellung von Produkten im Zusammenhang mit der Medizinaltechnik (Spritzen, Pumpen, usw.), der Automobilindustrie (Filtergehäuse, Behälter, usw.), mit Computern und Computerzubehör, Sportartikel (Turnschuhe, Schläger), Telekommunikation (Mobiltelefone und Bestandteile, usw.).

Die hier offenbarte Erfindung bietet unter anderem folgende Möglichkeiten:
- Spritzen von zwei unterschiedlichen Teilen in einer ersten Station
- Zusammenführen der Teile mittels eines in der Werkzeug-Maschine integrierten Montagesystems in einer zweiten Station
- Überspritzen der in der zweiten Station zusammengeführten Teile in einer dritten Station
- Entnehmen der fertigen Teile in einer vierten Station

Daraus ergeben sich folgende Vorteile gegenüber herkömmlichen Technologien:
- Herstellung eines komplexen Teiles auf einer Maschine, einem System
- keine komplexen Montagesysteme
- kein Logistikaufwand
- kürzest möglicher Zyklus durch simultane Montage und Entnahme zum Spritzvorgang
- höchstmögliche Qualität, da immer das gleiche Unterteil auf das gleiche Oberteil montiert wird
- komplette Anlage aus einer Hand.

Ausführungsformen der Erfindung werden anhand der nachfolgenden Figuren näher erläutert. Es zeigen:

Fig.1 Eine Spritzgiessvorrichtung in einer perspektivischen Darstellung;

Fig. 2 eine Detailansicht der Spritgiessvorrichtung gemäss Figur 1;

Fig. 3 ein erfindungsgemässes Verfahren;

Fig. 4 einen quaderförmigen Hohlkörper;

Fig. 5 ein Detail des quaderförmigen Hohlkörpers aus Figur 4.

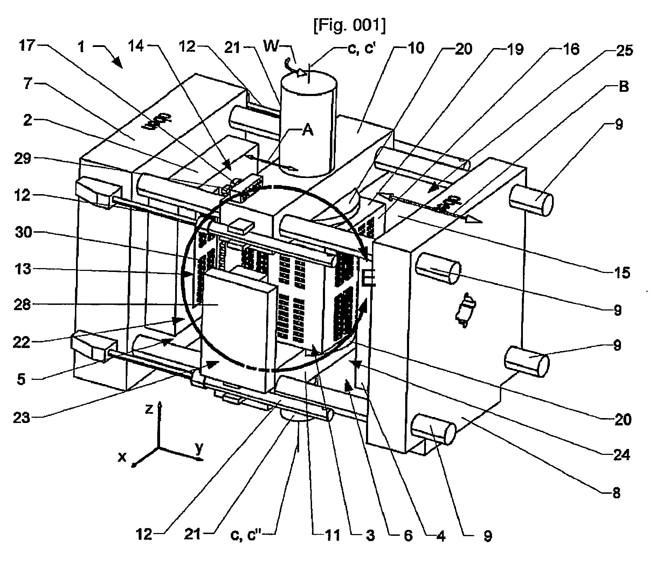

**Figur 1** zeigt eine Spritzgiessvorrichtung 1 zur Durchführung des erfindungsgemässen Verfahrens. Die Spritzgiessvorrichtung 1 weist eine erste, eine zweite und eine dritte Formhälfte 2, 3, 4 auf. Die erste Formhälfte 2 ist an einer feststehenden ersten Maschinenplatte 7 einer Spritzgiessmaschine (nicht näher dargestellt) mit Holmen 9 befestigt. Die dritte Formhälfte 4 ist an einer entlang von Holmen 9 in y-Richtung verschiebbar angeordneten zweiten Maschinenplatte 8 befestigt. Die zweite Formhälfte 3 ist zwischen der ersten und der dritten Formhälfte 2, 4 angeordnet und wird mittels einer ersten, unteren und einer zweiten, oberen Traverse 10, 11 gehalten. Sowohl die erste als auch die zweite Traverse 10,11 sind so auf den Holmen 9 gelagert, dass sie entlang von diesem verschiebbar sind. Der Antrieb jeder Traverse 10, 11 erfolgt mittels je zwei Hydraulikzylindern 12. Der Antrieb der zweiten Maschinenplatte 8 entlang der Holmen 9 erfolgt mittels einer Schliessvorrichtung der Spritzgiessmaschine (beides nicht näher dargestellt). Die Bewegung der zweiten Formhälfte 3 ist mittels eines Pfeils A und die Bewegung der dritten Formhälfte 4 ist mittels eines Pfeils B angedeutet. Beim Öffnen und beim Schliessen der Spritzgiessvorrichtung 1 ist die Geschwindigkeit der zweiten Formhälfte 3 etwa halb so gross wie die Geschwindigkeit der dritten Formhälfte 4, so dass die zweite Formhälfte 3 in etwa die Hälfte des Weges der dritten Formhälfte zurücklegt. Die erste und die zweite Formhälfte 2, 3 sind entlang einer ersten Schliessebene 5 und die zweite und die dritte Formhälfte 3, 4 entlang einer zweiten Schliessebene 6 wirkverbindbar und bilden im wirkverbundenen Zustand erste und zweite, respektive dritte Kavitäten 13, 14,15 zum Einspritzen von Kunststoff durch Einspritzkanäle (nicht näher dargestellt).

Die zweite Formhälfte 3 ist bei der gezeigten Ausführungsform im Wesentlichen quaderförmig ausgestaltet. Die vier Seitenflächen 16, die je paarweise parallel angeordnet sind, tragen je erste und zweite Kavitätenhälften 17, 18, die im geschlossenen Zustand in Wirkverbindung mit der ersten, respektive der dritten Formhälfte 2, 4 je einen Teil einer ersten und einer zweiten, respektive einer dritten Kavität 13, 14, 15 bilden.

Jede der beiden Traversen 10, 11 weisen je einen mittels einer Dreheinheit 21 drehbar angeordneten Adapter 20 auf, der als Haltvorrichtung der zweiten Formhälfte 3 geeignet ist. Die Adapter 20 sind lösbar mit der zweiten Formhälfte 3 wirkverbunden. Zum Ein- und Ausbau der zweiten Formhälfte 3 sind die Adapter 20, respektive die Traversen 10, 11 relativ zu einander verschiebbar.

Jeder der Adapter 20 ist um eine Achse c', respektive c" (hier parallel zu einer z-Richtung) drehbar angeordnet. Bei übereinander liegenden Traversen 10, 11 fluchten die erste und die zweite Achse c' , c" miteinander, so dass die zweite Formhälfte 3 bei geöffneter Spritzgiessvorrichtung 1 um eine Hauptdrehachse c drehbar ist. Der Antrieb der zweiten Formhälfte 3 erfolgt vorzugsweise über einen in der Dreheinheit 21 integrierten Hydraulik- oder Elektromotor (beide nicht näher dargestellt). Um möglichst zeitoptimiert zu Verfahren kann die zweite Formhälfte schon während dem Öffnen der Spritzgiessvorrichtung 1 um die Drehachse c um den Winkel W gedreht werden.

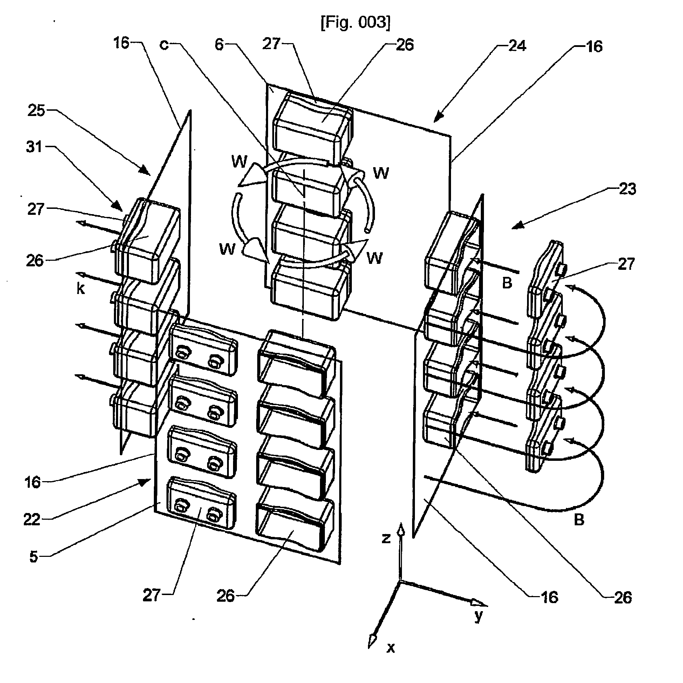

Bei geschlossener Spritzgiessvorrichtung 1 bilden erste und zweite Kavitätenhälften 17,18 der zweiten Formhälfte 3 zusammen mit dritten und vierten Kavitätenhälften 29, 30 der ersten Formhälfte 2 erste und zweite Kavitäten 13, 14 eines ersten Verarbeitungsbereichs 22 in welchem als erster Arbeitsschritt bei der Herstellung eine oder mehrere Kunststoffkomponenten eingespritzt werden, so dass erste und zweite Teile 26, 27 (vgl. Figur 3) gebildet werden.

Nach dem Einspritzen des Kunststoff in die ersten und die zweiten Kavitäten 13, 14 wird die Spritzgiessvorrichtung 1 geöffnet und die mittlere Formhälfte 3 zusammen mit den ersten und den zweiten Teilen 26, 27 um die Drehachse c um einen Winkel W, der hier im Wesentlichen 90° beträgt, rotiert, bis die ersten und die zweiten Teile 26, 27 in einem zweiten Verarbeitungsbereich 23 zu liegen kommen, der im Wesentlichen in einem 90°-Winkel zum ersten Verarbeitungsbereich 22 angeordnet ist. Durch die Rotation um die Achse c wird gleichzeitig die in Rotationsrichtung gesehen nachfolgende Seitenfläche 16 der zweiten Formhälfte von einem vierten Verarbeitungsbereich 25 in den ersten Verarbeitungsbereich 22 gebracht.

Im zweiten Verarbeitungsbereich 23 werden die ersten und die zweiten Teile 26, 27 hier durch eine Umsetzvorrichtung 28 (Manipulator) miteinander in Wirkverbindung gebracht indem das erste mit dem zweiten Teil 26, 27 zusammengefügt, respektive Wirkverbunden (andere Manipulationen sind in Ergänzung oder alternativ möglich) wird. Die beiden Teile 26, 27 sind dabei vorzugsweise so ausgestaltet, dass sie zumindest eine temporäre kraft- oder formschlüssige Verbindung eingehen (alternative Manipulationen sind möglich). Die Umsetzvorrichtung 28 bildet einen Bestandteil der Spritgiessvorrichtung 1 oder wird ist, je nach Anwendungsgebiet als separate Vorrichtung ausgestaltet. Bei einer Ausführungsform ist die Umsetzvorrichtung zumindest mit einer der beiden Traversen 10, 11 wirkverbunden, respektive befestigt und/oder ausgerichtet. Je nach Anwendungsgebiet weist die Umsetzvorrichtung 28 Greifer, Sauggreifer oder andere geeignete Mittel auf. Die Bewegung der Umsetzvorrichtung 28 kann je nach Bedarf lineare, kreisförmige und/oder räumliche Bewegungskomponenten aufweisen. Es besteht bei Bedarf die Möglichkeit mehrere Bewegungsmuster zu überlagern.

Die Funktionsweise einer Umsetzvorrichtung wird im Zusammenhang mit den nachfolgenden Figuren detaillierter erläutert.

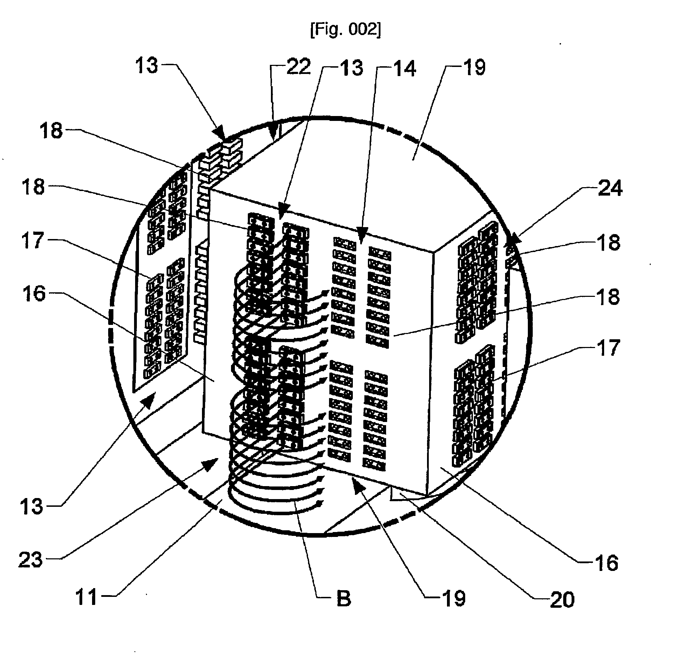

**Figur 2** zeigt die Detailansicht E aus Figur 1. Die sich im zweiten Verarbeitungsbereich 23 befindlichen ersten und zweiten Teile 26 (vgl. Figur 3) werden mittels der Umsetzvorrichtung 28 (vgl. Figur 1, hier der Übersichtlichkeit halber nicht dargestellt) erfasst, aus den ersten Kavitätenhälften 17 herausgenommen und mit den sich in den zweiten Kavitätenhälften 18 befindlichen zweiten Teile 27 (vgl. Figur 3) zusammengefügt respektive wirkverbunden. Dabei verbleiben die zweiten Teile 27 in den zweiten Kavitätenhälften 18. Der Bewegungsweg der ersten Teile 26 wird hier durch Bewegungspfeile B schematisch angedeutet. Das Umsetzen erfolgt z.B. mittels eines Roboters oder eines Greifarmes die als Montagesystem dienen. Im zweiten Verarbeitungsbereich besteht die Möglichkeit aktiv zu kühlen.

Anstelle einer Wirkverbindung zwischen zwei unterschiedlichen Teilen besteht alternativ oder in Ergänzung die Möglichkeit eines oder mehrere Teile im Bereich des zweiten Verarbeitungsbereichs 23 zu einem separaten Zwischenbearbeitungsschritt zu unterwerfen (Umlegen, Befüllen, Montieren, Zusammensetzen, Beschriften, Bedrucken, Auskühlen) bevor es im Bereich der zweiten Schliessebene 6 (dritter Verarbeitungsbereich 24) einem weiteren Verfahrensschritt unterworfen wird. Dasselbe gilt für den vierten Verarbeitungsbereich 25 in dem neben der typischer Weise erfolgenden Entnahme eines fertigen Produktes z.B. die Möglichkeit besteht, ein eine Etikette, resp. Beschriftung so aufbringen, dass diese später beim Einspriten von Kunststoff auf ein Teil des Endproduktes übertragen wird.

Anstelle einer im Wesentlichen quaderförmigen zweiten Formhälfte (3) kann bei Bedarf eine zweite Formhälfte mit einer anderen Ausgestaltung verwendet werden. Beispielsweise kann die zweite Formhälfte mit einer hexagonalen oder oktaedrischen Grundfläche mit je drei oder vier Paaren von parallelen Seitenflächen aufweisen. Die bietet die Möglichkeit mehr als einen Bearbeitungsschritt zwischenzuschalten. Eine entsprechende Anpassung der Drehwinkel ist erforderlich. Eine andere Anzahl von Seitenflächen ist möglich.

**Figur 3** zeigt schematisch ein erfindungsgemässes Verfahren am Beispiel eines zweiteiligen quaderförmigen Hohlkörpers 31, wie er z.B. in der Medizinaltechnik, insbesondere Diagnostik, oder der Computertechnologie Verwendung findet. Der quaderförmige Hohlkörper 31 weist einen konkaven Untereil 26 (erster Teil) und einen Deckel 27 (weiter Teil) mit zwei Anschlüssen 32 auf. In einem ersten Verfahrensbereich 22 (erste Schliessebene 5) werden der erste und der zweite Teil 26, 27 hergestellt. Im Wesentlichen zeitgleich zum Vorgang im ersten Verfahrensbereich 22 werden in einem dritten Verfahrensbereich 24 (zweite Schliessebene 6) zwei vorgängig hergestellte und in einem zweiten Verfahrensbereich 23 zusammengefügte erste und zweite Teile 26, 27 mit einem umlaufenden hier bandförmige dritten Teil 33 verbunden. Das Band 33 (dritter Teil) kann bei Bedarf so ausgestaltet sein, dass der Hohlkörper 31 bei Bedarf geöffnet werden kann, z.B. in dem das Band 33 ganz entfernt oder zur Seite bewegt wird. Zur Herstellung des Bandes 33 befinden sich die zusammengefügten ersten und zweiten Teile 26, 27 in einer dritten Kavität (vgl. Figur 1), in welche Kunststoff eingespritzt wird. Die Wandung der dritten Kavität wird hier bereichsweise durch das erste und das zweite Teil 26, 27 gebildet. In einer vierten Verarbeitungsstation 25 werden im Wesentlichen zeitgleich zu den vorgängig beschriebenen Verfahrensschritten fertige Hohlkörper 33 aus der Spritzgiessvorrichtung (nicht näher dargestellt) entnommen, was durch Pfeile K angedeutet wird.

In einem zweiten Verfahrensbereich 23 werden im Wesentlichen zeitgleich zu den Verfahrensabläufen im ersten und im dritten Verfahrensbereich 22, 24 erste und zweite Teile 26, 27 zusammengefügt, was schematisch durch die Pfeile B verdeutlicht wird. Die zweiten Teile 27 sind dabei schematisch in einer Zwischenposition dargestellt. Die Seitenflächen 16 der zweiten Formhälfte (vgl. Figur 1) sind hier nur stark vereinfacht dargestellt.

Nach jedem Öffnen der Spritzgiessvorrichtung (vgl. Figur 1) wird die zweite Formhälfte und mit ihr die Seitenflächen 16 um die Drehachse c um den Winkel W bewegt. Dadurch findet der Wechsel zwischen den einzelnen Verarbeitungsstationen 22, 23, 24, 25 statt. Im zweiten Verfahrensbereich 23 besteht bei Bedarf die Möglichkeit den Hohlkörper 31 zu befüllen.

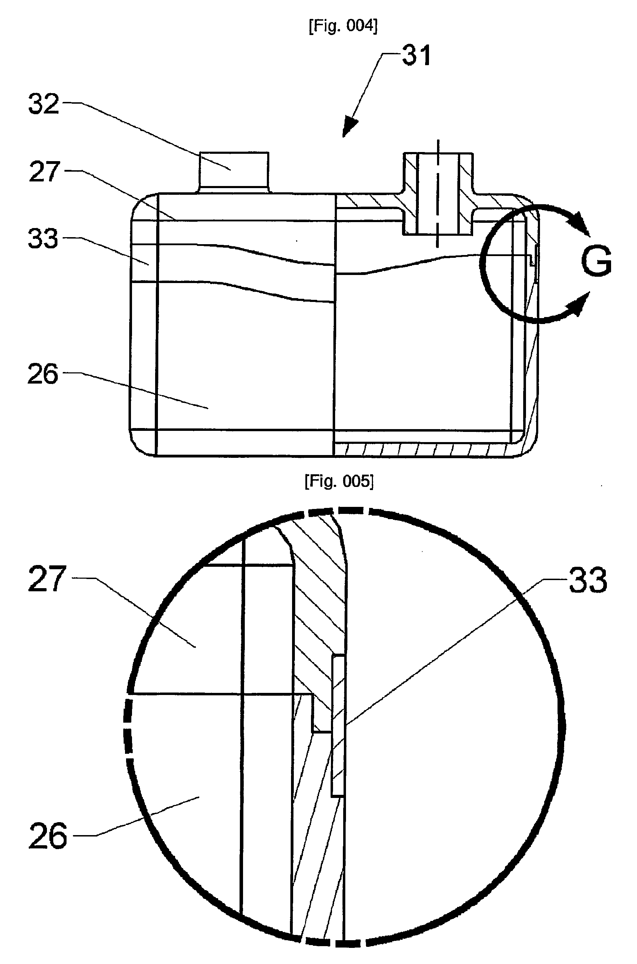

**Figur 4** zeigt den Hohlkörper 31 in einer teilweise geschnittenen Darstellung. Der Unterteil 26 und der Deckel 27 sind mittels dem Band 33 fest verbunden. Die Anschlüsse 32 führen ins innere des Höhlkörpers 31 und dienen z.B. zum Einleiten, resp. Ausleiten von Stoffen (gasförmig, flüssig, fest).

**Figur 5** zeigt das Detail G aus Figur 4 im Bereich der Stossstelle zwischen den Unterteil 26, dem Deckel 27 und dem Band 33. Der Unterteil 26 und der Deckel 27 weisen einen umlaufenden Absatz 34 auf, welcher das Zusammenfügen, respektive Positionieren im zweiten Verarbeitungsschritt 23 (vgl. Figuren 1, 3) positiv unterstützt. Das Band 33 ist hier in einer Vertiefung 35 angeordnet, so dass es nicht übersteht. Andere Anordnungen sind möglich. Der Absatz ist bei Bedarf so ausgebildet, dass er als form- und/oder reibschlüssige Verbindung wirkt. Der Absatz wirkt vorzugsweise so, dass die zusammengefügten Teile in horizontaler und vertikaler Richtung gegeneinander positioniert sind.

## Patentansprüche

1. Verfahren zur Herstellung eines Gegenstandes (26, 27, 31) mittels Spritzgiessen in einer Spritzgiessvorrichtung (1) beinhaltend die folgenden Verfahrensschritte:
a) Herstellen eines ersten und eines zweiten Teils (26, 27) in einem ersten Verarbeitungsbereich (22) durch Einspritzen von mindestens einer Materialkomponente in eine erste und eine zweite Kavität (13, 14, 15), welche durch Kavitätenhälften (17, 18) einer ersten Formhälfte (2) und einer um eine Drehachse (c) drehbar angeordneten zweiten Formhälfte (3) gebildet werden;
b) Öffnen der Kavitäten (13, 14, 15) entlang einer ersten Schliessebene (5) durch relatives Verschieben der zweiten gegenüber der ersten Formhälfte (2, 3) in einer ersten Bewegungsrichtung (x), wobei das erste und das zweite Teil (26, 27) mit der zweiten Formhälfte (3) wirkverbunden bleiben;
c) Drehen der zweiten Formhälfte (3) und mit ihr das erste und das zweite Teil (26, 27) um die Drehachse (c) um einen Winkel (W) in einen zweiten Verarbeitungsbereich (23);
d) Wirkverbinden des ersten und des zweiten Teils (26, 27) im zweiten Verarbeitungsbereich (23) mittels eines Manipulator (28) so dass eines der Teile (26, 27) mit der zweiten Formhälfte (3) wirkverbunden bleibt;
e) Drehen der zweiten Formhälfte (3) mit den wirkverbundenen Teilen (26, 27) um den Winkel (W) um die Drehachse (c), so dass die wirkverbundenen Teile (26, 27) im Bereich einer zweiten Schliessebene (6) in einen dritten Verarbeitungsbereich (24) zu liegen kommen;
f) Unterziehen der wirkverbundenen Teile (26, 27) einem weiteren Spritzgiessvorgang im Bereich des dritten Verarbeitungsbereichs (24);
g) Drehen der zweiten Formhälfte (3) mit den wirkverbundenen Teilen (26, 27) um den Winkel W um die Drehachse (c), so dass die wirkverbundenen Teile (26, 27) in einen vierten Verarbeitungsbereich (25) zu liegen kommen;
h) Entnahme der wirkverbundenen Teile (26, 27) aus der Spritzgiessvorrichtung (1).

2. Verfahren gemäss Patentanspruch 1, **dadurch gekennzeichnet, dass** die beiden Wirkverbundenen Teile (26, 27) im Bereich einer zweiten Schliessebene (6), die zur ersten Schliessebene (5) im wesentliche parallel angeordnet ist, in mindestens einer dritten. Kavität. (15), welche durch die zweite und eine dritte Formhälfte (3, 4), sowie bereichsweise durch mindestens eines der beiden Teile (26, 27) gebildet wird eingeschlossen wird.

3. Verfahren gemäss Patentanspruch 2, **dadurch gekennzeichnet, dass** in die mindestens eine dritte Kavität (15) zur Bildung eines dritten Teils (33) Kunststoff eingespritzt wird, so dass das erste und das zweite Teil (26, 27) durch das dritte Teil (33) zumindest bereichsweise umspritzt oder durchdrungen sind.

4. Verfahren gemäss einem der vorangehenden Patentansprüche, **dadurch gekennzeichnet, dass** die Verfahrensschritte a und f, sowie d und h aus Patentanspruch 1 im Wesentlichen gleichzeitig durchgeführt werden.

5. Verfahren gemäss einem der vorangehenden Patentansprüche, **dadurch gekennzeichnet, dass** das erste und/oder das zweite Teil (26, 27) im Bereich des zweiten Verarbeitungsbereichs (23) einem Zwischenverarbeitungsschritt wie Umlegen, Befüllen, Montieren, Zusammenrisetzen, Beschriften, Bedrucken oder Kühlen unterzogen wird.

6. Verfahren gemäss einem der vorangehenden Patentansprüche, **dadurch gekennzeichnet, dass** das Wirkverbinden des ersten und des zweiten Teils (26, 17) mittels eines Roboters, eines Greifarmes oder eines Sauggreifers erfolgt.

7. Spritzgiessvorrichtung (1) zur Durchführung des Verfahrens gemäss einem der vorangehenden Patentansprüche mit einer ersten Formhälfte (2), einer relativ zur ersten in einer ersten Richtung (x) verschiebbar und um eine Drehachse (c) drehbar angeordneten zweiten Formhälfte (3), die im Bereich einer ersten Schliessebene (5) entlang jeweils einer Seitenfläche (16) mit der ersten Formhälfte (2) zusammenwirkt, und einer relativ zur ersten und zur zweiten Formhälfte (2, 3) in der ersten Richtung (x) verschiebbaren dritten Formhälfte (4), die im Bereich einer zweiten Schliessebene (6) mit jeweils einer Seitenfläche (16) der zweiten Formhälfte (3) zusammenwirkt, sowie mindestens einem im Wesentlichen seitlich neben den Formhälften (2, 3, 4) angeordneten Manipulator (28), wobei die erste Formhälfte (2) im Bereich einer ersten Schliessebene (5) erste und zweite Kavitätenhälften (17, 18) für mindestens ein erstes und ein zweites Teil (26, 27) aufweist, die im geschlossenen Zustand der Spritzgiessvorrichtung (1) mit entsprechenden Kavitätenhälften (17, 18) im Bereich einer Seitenfläche (16) der zweiten Formhälfte (2) zusammenwirken, derart, dass im Bereich der ersten Schliessebene (5) ein erstes und ein zweites Teil (26, 27) durch Einspritzen von Kunststoff herstellbar sind, **dadurch gekennzeichnet, dass** die dritte Formhälfte im Bereich der zweiten Schliessebene (6) mindestens eine dritte Kavitätenhälfte (29) aufweist, die zur Aufnahme von mit der zweiten Formhälfte (3) transportierten und mittels dem Manipulator (28) miteinander wirkverbundenen ersten und zweiten Teilen (26, 27) geeignet ist, derart, dass diese in schliessstellung der Spritzgiessvorrichtung (1) im Bereich der zweiten Schliessebene (6) einem weiteren Spritzgiessvorgang unterzogen werden könnten.

8. Spritzgiessvorrichtung (1) gemäss Patentanspruch 7, **dadurch gekennzeichnet, dass** die zweite Formhälfte (3) durch zwei Traversen (10, 11) im Wesentlichen symmetrisch gelagert ist, welche an Holmen (9) einer Spritzgiessmaschine befestigt sind.

9. Spritzgiessvorrichtung (1) gemäss einem der Patentansprüche 7 oder 8, **dadurch gekennzeichnet, dass** die zweite Formhälfte (2) einseitig, asymmetrisch gelagert ist.

10. Spritzgiessvorrichtung (1) gemäss einem der Patentansprüche 7 oder 8, **dadurch gekennzeichnet, dass** die zweite Formhälfte (3) direkt oder indirekt auf dem Maschinenbett einer Spritzgiessmaschine abgestützt ist.

11. Spritzgiessvorrichtung (1) gemäss einem der Patentansprüche 7 bis 10, **dadurch gekennzeichnet, dass** der Manipulator (28) zur Wirkverbindung des ersten mit dem zweiten Teils (26, 27) ein Roboter, ein Greifarm oder ein Sauggreifer ist.

12. Spritzgiessvorrichtung (1) gemäss einem der Patentansprüche 7 bis 11, **dadurch gekennzeichnet, dass** die zweite Formhälfte (3) eine hexagonale oder oktaedrische Grundfläche aufweist.

## Claims

1. Method for producing an object (26, 27, 31) by means of injection moulding in an injection-moulding device (1), comprising the following method steps:
a) producing a first and a second part (26, 27) in a first processing area (22) by injecting at least one material component into a first and a second cavity (13, 14, 15), which are formed by cavity halves (17, 18) of a first mould half (2) and a second mould half (3), arranged rotatably about an axis of rotation (c);
b) opening the cavities (13, 14, 15) along a first closing plane (5) by relative displacement of the second mould half (3) with respect to the first mould half (2) in a first direction of movement (x), the first and second parts (26, 27) remaining operatively connected to the second mould half (3);
c) turning the second mould half (3), and with it the first and second parts (26, 27), about the axis of rotation (c) by an angle (W) into a second processing area (23);
d) operatively connecting the first and second parts (26, 27) in the second processing area (23) by means of a manipulator (28), so that one of the parts (26, 27) remains operatively connected to the second mould half (3);
e) turning the second mould half (3) with the operatively connected parts (26, 27) by the angle (W) about the axis of rotation (c), so that the operatively connected parts (26, 27) come to lie in the region of a second closing plane (6) in a third processing area (24);
f) subjecting the operatively connected parts (26, 27) to a further injection-moulding operation in the region of the third processing area (24);
g) turning the second mould half (3) with the operatively connected parts (26, 27) by the angle W about the axis of rotation (c), so that the operatively connected parts (26, 27) come to lie in a fourth processing area (25);
h) removing the operatively connected parts (26, 27) from the injection-moulding device (1).

2. Method according to Patent Claim 1, **characterized in that** the two operatively connected parts (26, 27) are enclosed in the region of a second closing plane (6), which is arranged substantially parallel to the first closing plane (5), in at least one third cavity (15), which is formed by the second and a third mould half (3, 4) as well as in certain regions by at least one of the two parts (26, 27).

3. Method according to Patent Claim 2, **characterized in that** plastic is injected into the at least one third cavity (15) to form a third part (33), so that, at least in certain regions, the first and second parts (26, 27) are encapsulated or passed through by the third part (33).

4. Method according to one of the preceding patent claims, **characterized in that** method steps a and f as well as d and h from Patent Claim 1 are carried out substantially simultaneously.

5. Method according to one of the preceding patent claims, **characterized in that**, in the region of the second processing area (23), the first and/or the second part (26, 27) is/are subjected to an intermediate processing step such as beading, filling, mounting, assembling, marking, printing or cooling.

6. Method according to one of the preceding patent claims, **characterized in that** the operative connection of the first and second parts (26, 27) is performed by means of a robot, a gripping arm or a suction gripper.

7. Injection-moulding device (1) for carrying out the method according to one of the preceding patent claims, comprising a first mould half (2), a second mould half (3), which is arranged such that it can be displaced in relation to the first in a first direction (x) and can be turned about an axis of rotation (c) and interacts with the first mould half (2) along a respective side face (16) in the region of a first closing plane (5), and comprising a third mould half (4), which can be displaced in relation to the first and second mould halves (2, 3) in the first direction (x) and interacts with a respective side face (16) of the second mould half (3) in the region of a second closing plane (6), as well as comprising at least one manipulator (28) arranged substantially laterally alongside the mould halves (2, 3, 4), wherein the first mould half (2) has in the region of a first closing plane (5) first and second cavity halves (17, 18) for at least one first and one second part (26, 27), which in the closed state of the injection-moulding device (1) interact with corresponding cavity halves (17, 18) in the region of a side face (16) of the second half (3) in such a way that a first and a second part (26, 27) can be produced in the region of the first closing plane (5) by injecting plastic, **characterized in that** the third mould half has in the region of the second closing plane (6) at least one third cavity half (29), which is suitable for receiving first and second parts (26, 27) that are transported with the second mould half (3) and operatively connected to one another by means of the manipulator (28), in such a way that these parts can be subjected to a further injection-moulding operation in the closed position of the injection-moulding device (1) in the region of the second closing plane (6).

8. Injection-moulding device (1) according to Patent Claim 7, **characterized in that** the second mould half (3) is mounted substantially symmetrically by two cross members (10, 11), which are fastened to tie bars (9) of an injection-moulding machine.

9. Injection-moulding device (1) according to either of Patent Claims 7 and 8, **characterized in that** the second mould half (3) is mounted to one side, asymmetrically.

10. Injection-moulding device (1) according to either of Patent Claims 7 and 8, **characterized in that** the second mould half (3) is directly or indirectly supported on the machine bed of an injection-moulding machine.

11. Injection-moulding device (1) according to one of Patent Claims 7 to 10, **characterized in that** the manipulator (28) for the operative connection of the first part (26) to the second part (27) is a robot, a gripping arm or a suction gripper.

12. Injection-moulding device (1) according to one of Patent Claims 7 to 11, **characterized in that** the second mould half (3) has a hexagonal or octahedral base area.

## Revendications

1. Procédé pour fabriquer un objet (26, 27, 31) au moyen d'un moulage par injection dans un dispositif de moulage par injection (1), comprenant les étapes de procédé suivantes :
a) fabrication d'une première et d'une deuxième partie (26, 27) dans une première zone de traitement (22) par injection d'au moins un composant de matériau dans une première et une deuxième cavité (13, 14, 15), qui sont formées par des moitiés de cavité (17, 18) d'une première moitié de moule (2) et d'une deuxième moitié de moule (3) disposée de manière à pouvoir tourner autour d'un axe de rotation (c),
b) ouverture des cavités (13, 14, 15) le long d'un premier plan de fermeture (5) par déplacement relatif de la deuxième moitié de moule par rapport à la première moitié de moule (2, 3) dans une première direction de déplacement (x), la première et la deuxième parties (26, 27) restant connectées fonctionnellement à la deuxième moitié de moule (3) ;
c) rotation de la deuxième moitié de moule (3) et avec elle, la première et la deuxième parties (26, 27), autour de l'axe de rotation (c) suivant un angle (W) dans une deuxième zone de traitement (23) ;
d) liaison fonctionnelle de la première et de la deuxième partie (26, 27) dans la deuxième zone de traitement (23) au moyen d'un manipulateur (28) de telle sorte que l'une des parties (26, 27) reste connectée fonctionnellement à la deuxième moitié de moule (3) ;
e) rotation de la deuxième moitié de moule (3) avec les parties connectées fonctionnellement (26, 27) suivant l'angle (W) autour de l'axe de rotation (c), de sorte que les parties connectées fonctionnellement (26, 27) viennent se placer dans la région d'un deuxième plan de fermeture (6) dans une troisième zone de traitement (24) ;
f) soumission des parties connectées fonctionnellement (26, 27) à une opération de moulage par injection supplémentaire dans la région de la troisième zone de traitement (24) ;
g) rotation de la deuxième moitié de moule (3) avec les parties connectées fonctionnellement (26, 27) suivant l'angle (W) autour de l'axe de rotation (c), de sorte que les parties connectées fonctionnellement (26, 27) viennent se placer dans une quatrième zone de traitement (25) ;
h) enlèvement des parties connectées fonctionnellement (26, 27) du dispositif de moulage par injection (1).

2. Procédé selon la revendication 1, **caractérisé en ce que** les deux parties connectées fonctionnellement (26, 27) sont incorporées dans la région d'un deuxième plan de fermeture (6), qui est disposé essentiellement parallèlement au premier plan de fermeture (5), dans au moins une troisième cavité (15), qui est formée par la deuxième et une troisième moitié de moule (3, 4), ainsi qu'en partie par au moins l'une des deux parties (26, 27).

3. Procédé selon la revendication 2, **caractérisé en ce que** dans l'au moins une troisième cavité (15) est injecté du plastique pour former une troisième partie (33), de sorte que la première et la deuxième parties (26, 27) soient au moins partiellement enrobées par injection ou traversées par la troisième partie (33).

4. Procédé selon l'une quelconque des revendications précédentes, **caractérisé en ce que** les étapes de procédé a et f, ainsi que d et h, de la revendication 1, sont mises en oeuvre essentiellement simultanément.

5. Procédé selon l'une quelconque des revendications précédentes, **caractérisé en ce que** la première et/ou la deuxième partie (26, 27), dans la région de la deuxième zone de traitement (23), sont soumises à une étape de traitement intermédiaire comme un repliement, un remplissage, un montage, un assemblage, un marquage, une impression ou un refroidissement.

6. Procédé selon l'une quelconque des revendications précédentes, **caractérisé en ce que** la connexion fonctionnelle de la première et de la deuxième partie (26, 27) s'effectue au moyen d'un robot, d'un bras de préhension ou d'un dispositif de préhension aspirant.

7. Dispositif de moulage par injection (1) pour mettre en oeuvre le procédé selon l'une quelconque des revendications précédentes, comprenant une première moitié de moule (2), une deuxième moitié de moule (3) déplaçable par rapport à la première dans une première direction (x) et disposée de manière à pouvoir tourner autour d'un axe de rotation (c), cette deuxième moitié de moule coopérant dans la région d'un premier plan de fermeture (5) le long d'une surface latérale respective (16) avec la première moitié de moule (2), et une troisième moitié de moule (4) pouvant être déplacée par rapport à la première et à la deuxième moitié de moule (2, 3) dans la première direction (x), cette troisième moitié de moule coopérant dans la région d'un deuxième plan de fermeture (6) avec une surface latérale respective (16) de la deuxième moitié de moule (3), ainsi qu'au moins un manipulateur (28) disposé essentiellement latéralement à côté des moitiés de moule (2, 3, 4), la première moitié de moule (2) présentant dans la région d'un premier plan de fermeture (5) des première et deuxième moitiés de cavité (17, 18) pour au moins une première et une deuxième partie (26, 27), qui coopèrent dans l'état fermé du dispositif de moulage par injection (1) avec des moitiés de cavité correspondantes (17, 18) dans la région d'une surface latérale (16) de la deuxième moitié de moule (3), de telle sorte que dans la région du premier plan de fermeture (5), une première et une deuxième partie (26, 27) puissent être fabriquées par injection de plastique, **caractérisé en ce que** la troisième moitié de moule présente, dans la région du deuxième plan de fermeture (6), au moins une troisième moitié de cavité (29), qui est prévue pour recevoir des première et deuxième parties (26, 27) transportées avec la deuxième moitié de moule (3) et connectées fonctionnellement l'une à l'autre au moyen du manipulateur (28), de telle sorte que celles-ci puissent être soumises à une opération d'injection supplémentaire dans la position de fermeture du dispositif de moulage par injection (1) dans la région du deuxième plan de fermeture (6).

8. Dispositif de moulage par injection (1) selon la revendication 7, **caractérisé en ce que** la deuxième moitié de moule (3) est supportée essentiellement symétriquement par deux traverses (10, 11) qui sont fixées sur des longerons (9) d'une machine de moulage par injection.

9. Dispositif de moulage par injection (1) selon l'une quelconque des revendications 7 ou 8, **caractérisé en ce que** la deuxième moitié de moule (3) est montée d'un côté de manière asymétrique.

10. Dispositif de moulage par injection (1) selon l'une quelconque des revendications 7 ou 8, **caractérisé en ce que** la deuxième moitié de moule (3) est supportée directement ou indirectement sur le lit de machine d'une machine de moulage par injection.

11. Dispositif de moulage par injection (1) selon l'une quelconque des revendications 7 à 10, **caractérisé en ce que** le manipulateur (28) pour la connexion fonctionnelle de la première à la deuxième partie (26, 27) est un robot, un bras de préhension ou un dispositif de préhension aspirant.

12. Dispositif de moulage par injection (1) selon l'une quelconque des revendications 7 à 11, **caractérisé en ce que** la deuxième moitié de moule (3) présente une surface de base hexagonale ou octaédrique.
